# EUROPEAN PATENT SPECIFICATION

(11) **EP 4 594 808 B1**
(45) Date of publication and mention of the grant of the patent: **24.06.2026**
(21) Application number: 23776616.7
(22) Date of filing: 22.09.2023
(51) Int. Cl.: G02B 21/00

(54) **SYSTEM AND METHOD FOR MULTICOLOR LIGHT SHEET MICROSCOPY**
SYSTEM UND VERFAHREN FÜR MEHRFARBEN-LICHTBLATTMIKROSKOPIE
SYSTÈME ET PROCÉDÉ DE MICROSCOPIE À FEUILLE DE LUMIÈRE MULTICOLORE

(30) Priority: 26.09.2022 IT 202200019701
(43) Date of publication of application: 06.08.2025
(73) Proprietor: Consiglio Nazionale Delle Ricerche, 00185 Roma (IT)
(72) Inventor: SILVESTRI, Ludovico, 00185 ROMA (IT)
(74) Representative: Pietra, Giulia
(86) International application number: PCT/EP2023/076184
(87) International publication number: WO 2024/068455

(56) References cited:
- WO-A1-2016/188143
- US-A1- 2015 098 126
- US-A1- 2020 284 715
- LUNA-PALACIOS YRYX Y. ET AL: "Multicolor light-sheet microscopy for a large field of view imaging: A comparative study between Bessel and Gaussian light-sheets configurations", vol. 15, no. 6, 10 March 2022 (2022-03-10), DE, XP093044424, ISSN: 1864-063X, Retrieved from the Internet <URL:https://onlinelibrary.wiley.com/doi/full-xml/10.1002/jbio.202100359> DOI: 10.1002/jbio.202100359
- CHATTERJEE KRISHNENDU ET AL: "Recent Progress in Light Sheet Microscopy for Biological Applications", vol. 72, no. 8, 21 June 2018 (2018-06-21), US, pages 1137 - 1169, XP093044468, ISSN: 0003-7028, Retrieved from the Internet <URL:http://journals.sagepub.com/doi/full-xml/10.1177/0003702818778851> DOI: 10.1177/0003702818778851

## Description

### Technical field

The present invention generally relates to the field of optical instruments. In particular, the present invention relates to a system and method for multicolor light sheet microscopy, for example (but not exclusively) multicolor light sheet fluorescence microscopy (LSFM).

### Background art

As known, a compound optical microscope comprises a tube lens and an objective. The objective usually comprises a first system of lenses placed in proximity of a sample to be analyzed, whereas the tube lens comprises a second system of lenses placed in proximity of the observation point. The objective collects the light emitted by the sample, and such emitted light is then focused by the tube lens onto the surface of a photodetector (usually a CCD) to create a magnified image of the sample.

Light sheet fluorescence microscopy (LSFM) is a technique for three-dimensional analysis of samples (typically, but not exclusively, biological samples), which exhibits both high resolution and high frame acquisition rates. In LSFM, a light sheet illuminates a thin slice (usually, a few hundred nanometers to a few micrometers) within the sample. The fluorescence light emitted by the illuminated slice of the sample is collected along an axis perpendicular to the light sheet by the objective of the microscope, and then it is focused onto the surface of the photodetector by the tube lens.

Multicolor imaging techniques are also known, which provide for illuminating a sample by two or more laser sources emitting light at different wavelengths. For example, in multicolor fluorescence imaging techniques, each wavelength excites different fluorophores in the sample, a fluorophore being a molecule that emits fluorescence when excited by a light at a wavelength close to the peak of its absorption spectrum. Each fluorophore has its absorption spectrum and its excitation spectrum.

When a multicolor imaging technique is applied to LSFM, each sample slice shall be illuminated by two separate light sheets with respective wavelengths, one for each fluorophore to be excited. On the reception side, the fluorescence emitted by each fluorophore shall be separately detected for each sample slice.

A first known technique for multicolor LSFM provides for illuminating each sample slice by a first light sheet at a first wavelength suitable to excite a first fluorophore, and filter the emitted fluorescence by means of a first bandpass filter centered about the excitation spectrum of that fluorophore before detection. Subsequently, the same sample slice is illuminated by a second light sheet at a second wavelength suitable to excite a second fluorophore, and the emitted fluorescence is filtered by means of a second bandpass filter centered about the excitation spectrum of that fluorophore before detection. The above procedure is iterated for each sample slice.

A second known technique for multicolor LSFM provides for simultaneously illuminating each sample slice by two light sheets at two different wavelengths, thereby simultaneously exciting both the fluorophores. The fluorescence emitted by the two fluorophores in their respective emission spectra is then split by a dichroic mirror. Each fluorescence may then be filtered by a respective bandpass filter and is then detected by a respective photodetector.

Another example of a system for multicolor light sheet microscopy can be found in US2020/284715A1.

### Summary of the invention

The Applicant has noticed that the above known techniques for multicolor LSFM exhibit some drawbacks.

The first technique has the advantage of removing, or at least strongly reducing, the crosstalk that typically occurs between emission spectra of different fluorophores, when they are close to each other or even partially overlapping. Conversely, the main disadvantage of this first known technique is its low speed. The acquisition time of a multicolor image of a sample slice indeed linearly scales with the number of fluorophores to be excited, thus affecting one of the main advantages of light sheet microscopy, namely speed.

The second technique has a lower acquisition time, since all the fluorophores are excited at the same time. However, the separation of the light emitted by different fluorophores occurs only through separation of their emission spectra. For this reason, this second known technique may introduce significant crosstalk between the emission spectra of different fluorophores, when they are close to each other or even partially overlapping.

In view of the above, the Applicant has tackled the problem of providing a system and method for multicolor light sheet microscopy (in particular, but not exclusively, multicolor fluorescence light sheet microscopy) which overcomes the aforesaid drawbacks.

In particular, the Applicant has tackled the problem of providing a system and method for multicolor light sheet microscopy (in particular, but not exclusively, multicolor fluorescence light sheet microscopy) which exhibits both a reduced crosstalk between different emission spectra, even when they are close to each other or even partially overlapping, and a reduced acquisition time.

According to embodiments of the present invention, the above problem is solved by a system and method which provide for simultaneously illuminating at least two strips of the sample by means of at least two substantially parallel light beams having different wavelengths. The at least two substantially parallel light beams are translated over time along a predetermined direction (also termed herein below "scanning direction"), thereby producing over time two light sheets at different wavelengths. During the scanning, the at least two substantially parallel light beams are kept at a non-null reciprocal distance along the scanning direction. This way, at each instant of the scanning cycle, the at least two illuminated strips of the sample are also placed at a non-null reciprocal distance along the scanning direction, while a same strip of the sample is illuminated by different light beams at different times. The light emitted by the sample is then split into two light portions which follow respective detection paths. Along each detection path, the respective light portion is subjected to a spatial filtering which isolates the light line emitted by one of the illuminated strips from the light lines emitted by the other strip(s). The light line emitted by each illuminated strip is then detected by a respective photodetector.

The system and method according to the present invention advantageously exhibits both a reduced crosstalk between different emission spectra, even when they are close to each other or even partially overlapping, and a reduced acquisition time.

The acquisition time of a multicolor image of a sample slice indeed is substantially equal to the duration of a scanning cycle, independently of the number of colors used, namely independently of the number of light beams subjected to scanning.

Besides, the non-null reciprocal distance of the light beams along the scanning direction results in each strip of the sample being illuminated by different light beams - and thus emitting light in different emission spectra - at slightly different times. On the other hand, the non-null reciprocal distance of the light beams along the scanning direction allows to isolate the light emitted by each strip from the light simultaneously emitted by the other illuminated strips by applying a spatial filtering. The combination of the time mismatch between emission of light in different emission spectra by a same strip and spatial filtering advantageously provides a particularly reduced crosstalk between different emissions spectra, even when such emission spectra are close to each other or even partially overlapping.

According to a first aspect, the present invention provides a system for multicolor light sheet microscopy, the system comprising an illumination sub-system and a detection sub-system, wherein:
- the illumination sub-system is configured to emit at least two substantially parallel light beams having different wavelengths and being suitable for illuminating at least two corresponding strips of a sample; and to translate over time the at least two substantially parallel light beams along a predetermined direction, while keeping the at least two substantially parallel light beams at a non-null reciprocal distance Y0 along the predetermined direction; and
- the detection sub-system is configured to split light emitted by the at least two corresponding strips of the sample into at least two light portions following respective detection paths; and, along each detection path, subject the respective light portion to a spatial filtering which isolates a light line emitted by one of the at least two corresponding strips of the sample, and detect the light line emitted by one of the at least two corresponding strips of a sample.

Preferably, the non-null reciprocal distance Y0 is set to a value such that a time lapsing between the instant at which one strip of the sample is illuminated by one of the at least two substantially parallel light beams and then by the other one of the at least two substantially parallel light beams is comprised between 0.5 ms and 2 ms.

Preferably, the illumination sub-system comprises at least one light source and a scanner configured to translate over time the at least two substantially parallel light beams along the predetermined direction, while keeping the at least two substantially parallel light beams at the non-null reciprocal distance Y0 along the predetermined direction.

Preferably, the at least one light source is at least one laser source.

According to an embodiment, the illumination sub-system comprises one light source and a wavelength splitting component suitable for spatially separating the at least two substantially parallel light beams.

The wavelength splitting component preferably comprises at least one of: a prism, a diffraction grating, or a combination of one or more dichroic mirrors and mirrors.

According to another embodiment, the illumination sub-system comprises two light sources, each light source being configured to emit a respective one of the at least two substantially parallel light beams.

Preferably, the scanner comprises at least one galvo mirror and/or at least one piezoelectric mirror.

Preferably, each one of the different wavelengths is suitable for exciting a respective fluorophore of the sample.

Preferably, the detection sub-system comprises, along each detection path, a detection slit configured to subject the respective light portion to the spatial filtering in a direction substantially parallel to the predetermined direction.

Preferably, the detection slit has a width, along the predetermined direction, higher than a width of the light line and lower than the non-null reciprocal distance Y0.

According to an embodiment, the detection slit has a fixed position along the predetermined direction, the detection sub-system further comprising, along each detection path, an optical arrangement configured to keep the detection slit aligned with the light line over time by translating the light line over time.

Preferably, such optical arrangement comprises at least one galvo mirror and/or at least one piezoelectric mirror.

According to another embodiment, the detection slit has a variable position along the predetermined direction, the detection sub-system further comprising, along each detection path, means for keeping the detection slit aligned with the light line over time by translating the detection slit over time.

According to a variant of this embodiment, the detection slit is implemented as a line of active pixels of a bidimensional array of pixels of a photodetector, the detection slit being kept aligned with the light line over time by translating the line of active pixels over time.

According to an embodiment, the detection sub-system comprises a beam splitter (preferably, a 50/50 beam splitter) configured to split the light emitted by the at least two corresponding strips of the sample into the at least two light portions following the respective detection paths.

According to another embodiment, the detection sub-system comprises a wavelength-based separator configured to split the light emitted by the at least two corresponding strips of the sample into the at least two light portions following the respective detection paths, each light portion comprising the light line emitted by a respective one of the at least two corresponding strips of the sample.

Preferably, the wavelength-based separator comprises at least one of: a prism, a diffraction grating or a combination of one or more dichroic mirrors and mirrors

Optionally, the detection sub-system further comprises, along each detection path, a respective bandpass filter.

Preferably, the detection sub-system further comprises, along each detection path, a respective photodetector configured to detect the light line emitted by one of the at least two corresponding strips of a sample.

According to a second aspect, the present invention provides a method for multicolor light sheet microscopy, the method comprising:
a) by means of at least two substantially parallel light beams having different wavelengths, illuminating at least two corresponding strips of a sample and translating over time the at least two substantially parallel light beams along a predetermined direction, while keeping the at least two substantially parallel light beams at a non-null reciprocal distance Y0 along the predetermined direction; and
b) splitting light emitted by the at least two corresponding strips of the sample into at least two light portions following respective detection paths; and
c) along each detection path, subjecting the respective light portion to a spatial filtering which isolates a light line emitted by one of the at least two corresponding strips of the sample, and detecting the light line emitted by one of the at least two corresponding strips of a sample.

### Brief description of the drawings

The present invention will become clearer from the following detailed description, given by way of example and not of limitation, to be read with reference to the accompanying drawings, wherein:
- Figure 1 schematically shows a system for multicolor light sheet microscopy according to an embodiment of the present invention;
- Figure 2 shows in further detail the illumination sub-system of the system of Figure 1, according to an embodiment of the present invention;
- Figure 3 schematically shows the detection technique applied by the system of Figure 1, according to embodiments of the present invention;
- Figure 4 shows in further detail the detection sub-system of the system of Figure 1, according to an embodiment of the present invention; and
- Figure 5 shows in further detail the detection sub-system of the system of Figure 1, according to a further embodiment of the present invention.

Annexed figures are not to scale.

### Detailed description of preferred embodiments of the invention

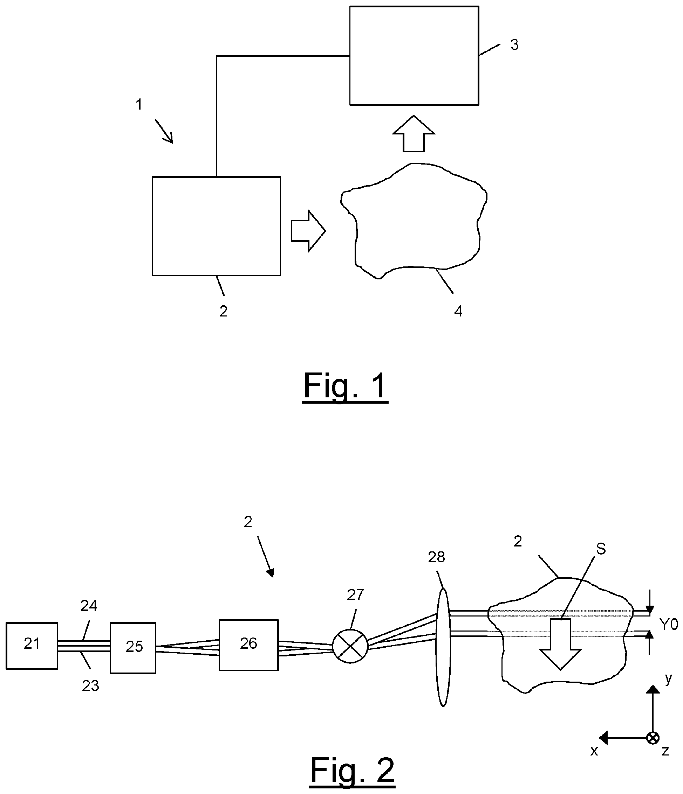

Figure 1 shows a system for multicolor light sheet microscopy according to embodiments of the present invention.

The system 1 comprises an illumination sub-system 2 and a detection sub-system 3. The illumination sub-system 2 is suitable for illuminating a three-dimensional sample 4, while the detection sub-system 3 is suitable for detecting light emitted by the three-dimensional sample 4 and provide multicolor images thereof.

As shown in more detail in Figure 2, the illumination sub-system 2 comprises at least one light source. By way of non-limiting example, the illumination sub-system 2 shown in Figure 2 comprises one light source 21. The light source 21 preferably is a laser source. The laser source 21 is configured to emit two light beams (specifically, two laser beams) 23, 24. The light beams 23, 24 preferably have different wavelengths. Preferably, each light beam 23, 24 has its wavelength close to the peak of the excitation spectrum of a respective fluorophore comprised in the sample 4. Each light beam 23, 24 may have a diameter comprised between 1 micrometer and 100 micrometers. The power of each light beam 23, 24 may range from 1 mW to 100 mW.

The illumination sub-system 2 also comprises an arrangement of optical components suitable for directing the light beams 23, 24 on the sample 4 so that they illuminate respective strips of the sample 4. In Figure 2 an orthogonal reference system is depicted, comprising three orthogonal axes x, y and z. When the light beams 23, 24 impinge on the sample 4, they are parallel to each other and are also parallel to the axis x. This way, each beam 23, 24 illuminates a respective strip of the sample 4. The luminated strips of the sample 4 are therefore also parallel to each other and parallel to the axis x.

The arrangement of optical components included in the illumination sub-system 2 is also suitable for simultaneously scanning the light beams 23, 24, namely for subjecting the light beams 23, 24 to a translation over time along a predetermined direction (also termed herein below "scanning direction"). The scanning direction is preferably perpendicular to the light beams 23, 24 themselves as they impinge on the sample 4. For example, as schematically indicated by the arrow S in Figure 2, the scanning direction may be parallel to the axis y. This way, the scanning of the light beams 23, 24 produces over time two light sheets at different wavelengths, both the light sheets being parallel to the plane xy. The light sheets produced by the simultaneous scanning of the light beams 23, 24 then illuminate over time a slice of the sample 4, which is also parallel to the plane xy.

The arrangement of optical components included in the illumination sub-system 2 is also suitable for keeping the light beams 23, 24 at a certain non-null reciprocal distance Y0 along the scanning direction, during the whole scanning cycle. This way, at each instant of the scanning cycle, the light beams 23, 24 illuminate respective strips of the sample 4, which are also placed at a non-null reciprocal distance Y0 along the scanning direction. Conversely, each strip of the sample 4 is illuminated by the light beams 23,24 at two different instants.

The reciprocal distance Y0 between the light beams 23, 24 is preferably set to a value such that the delay D between the light beams 23, 24 (namely, the time lapsing between the instants at which a same strip of the sample 4 is illuminated by one light beam and then by the other light beam) is comprised between 0.5 ms and 2 ms, for example 1 ms. The reciprocal distance Y0 is then equal to D/v, where v is the translation speed of the light beams 23, 24.

In the embodiment depicted in Figure 2, the arrangement of optical components included in the illumination sub-system 2 comprises a wavelength splitting component 25, which is suitable for spatially separating the light beams 23, 24 provided by the light source. The wavelength splitting component 25 may comprise for example a prism, a diffraction grating or a combination of one or more dichroic mirrors and mirrors. The wavelength splitting component 25 may be omitted, if the illumination sub-system 2 comprises two separate light sources, each one generating a respective light beam 23, 24.

The arrangement of optical components included in the illumination sub-system 2 also preferably comprises a relay optics 26 configured to align the light beams 23, 24 with a plane parallel to the plane xy.

The arrangement of optical components included in the illumination sub-system 2 also preferably comprises a scanner 27. The scanner 27 is configured to scan the light beams 23, 24, namely to translate the light beams 23, 24 along a scanning direction parallel to the axis y, as described above. The scanner 27 is preferably implemented by one or more galvo mirrors and/or piezoelectric mirrors.

The arrangement of optical components included in the illumination sub-system 2 also preferably comprises a lens 28 configured to direct the light beams 23, 24 so that they are mutually parallel and are parallel to the axis x as they impinge on the sample 4.

The illumination sub-system 2 also preferably comprises a further scanner (not depicted in the drawings) configured to translate the light beams 23, 24 along a direction perpendicular to the plane xy (namely, parallel to the axis z), in order to illuminate each slice of the sample 4. Alternatively, the sample 4 may be translated parallel to the axis z to illuminate each slice of the sample 4.

As described above, the detection sub-system 3 is suitable for detecting light emitted by the three-dimensional sample 4 and provide multicolor images thereof.

More specifically, the detection sub-system 3 comprises an optical arrangement suitable for splitting the light emitted by the sample 4 into at least two light portions, each light portion following a respective detection path. The light portion transmitted along each detection path preferably comprises at least the light emitted by one of the illuminated strips of the sample 4.

The detection sub-system 3 also preferably comprises, along each detection path, a respective detection slit which subjects the light portion following that detection path to a spatial filtering. The spatial filtering isolates the light emitted by one of the illuminated strips of the sample 4, namely it filters out the light emitted by the other strip(s) of sample 4 illuminated at the same time. The spatial filtering is preferably performed in a direction substantially parallel to the scanning direction.

Specifically, as described above, the illuminated strips of the sample 4 are parallel to the axis x and have a non-null reciprocal distance Y0 along the scanning direction, which is parallel to the axis y. The detection sub-system 3 preferably detects the light emitted by the illuminated strips in a direction perpendicular to the plane xy (namely, parallel to the axis z), which basically consists in two light lines also parallel to the axis x and having a non-null reciprocal distance Y0 along the scanning direction.

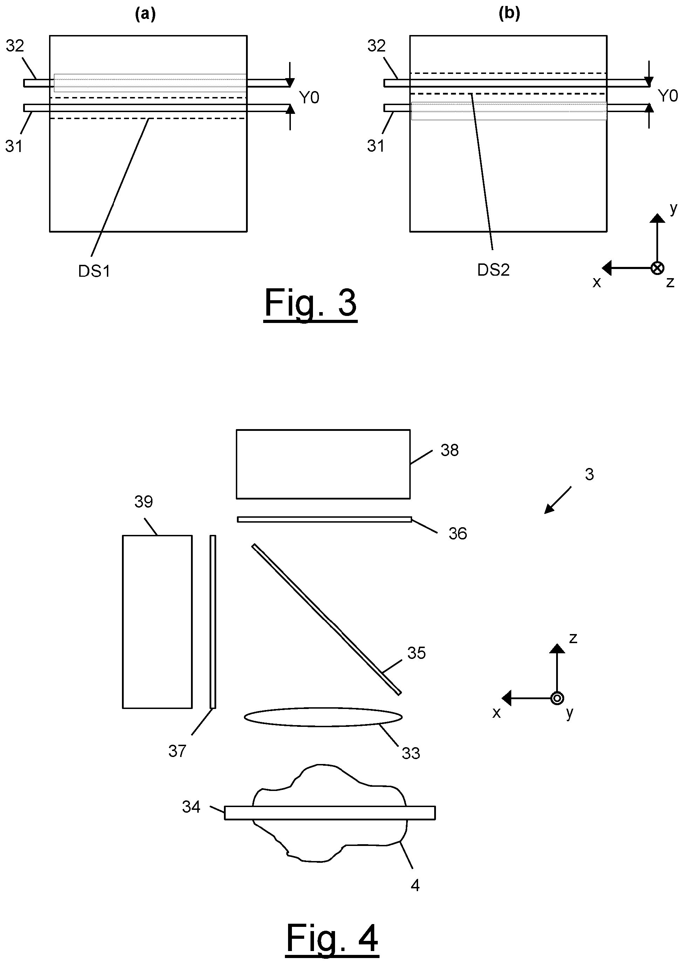

Figure 3 shows the spatial filtering performed along each one of the two detection paths. In Figure 3 the two light lines 31, 32 simultaneously emitted by the sample 4 are depicted. The leftmost drawing (a) shows the spatial filtering performed along one detection path, while the rightmost drawing (b) shows the spatial filtering performed along the other detection path.

Along the first detection path, a detection slit DS1 is provided, which is parallel to the axis x and whose position along the axis y is the same as that of the light line 31. The width of the detection slit DS1 along the axis y is preferably higher than the width of the light lines 31, 32, but lower than their mutual distance Y0. This way, the detection slit DS1 basically performs a confocal detection of the light line 31, namely it isolates the light line 31 by filtering out the light line 32.

Similarly, along the second detection path, a detection slit DS2 is provided, which is parallel to the axis x and whose position along the axis y is the same as that of the light line 32. The width of the detection slit DS2 along the axis y is preferably higher than the width of the light lines 31, 32, but lower than their mutual distance Y0. This way, the detection slit DS2 basically performs a confocal detection of the light line 32, namely it isolates the light line 32 by filtering out the light line 31.

As the scanning of the light beams 23, 24 proceeds, the light lines 31, 32, emitted by the illuminated strips of the sample 4 along the axis z, also translate along a direction parallel to the axis y. In order to ensure that the detection slit DS1, DS2 provided along each detection path is kept aligned with the respective light line 31, 32 during the whole scanning cycle of the light beams 23, 24, a compensation mechanism shall be provided. Such compensation mechanism (not depicted in Figure 3) may provide for:
- subjecting the detection slits DS1, DS2 to the same translation parallel to the axis y as the light beams 23, 24; or
- subjecting the light lines 31, 32 to a translation parallel to the axis y equal to and opposite to the translation of the light beams 23, 24 (also termed "descanning").

The system 1 exhibits several advantages.

First of all, the acquisition time of a multicolor image of each slice of the sample 4 is substantially equal to the duration of a scanning cycle, independently of the number of colors used, namely independently of the number of light beams subjected to scanning.

Besides, the non-null reciprocal distance of the light beams 23, 24 along the scanning direction results in each strip of the sample 4 being illuminated by the light beams 23, 24 - and thus emitting light in different emission spectra - at slightly different times. On the other hand, the non-null reciprocal distance of the light beams 23, 24 along the scanning direction allows to isolate the light emitted by each strip from the light simultaneously emitted by the other illuminated strips by applying the above spatial filtering on each detection path. The combination of the time mismatch between emission of light by a same strip in different emission spectra and spatial filtering advantageously provides a particularly reduced crosstalk between light emitted by the sample 4 in different emissions spectra, even when such emission spectra are close to each other or even partially overlapping.

Figure 4 shows in further detail the detection sub-system 3 according to a first embodiment of the present invention.

The detection sub-system 3 preferably comprises an objective 33 suitable for collecting the light 34 emitted by the sample 4 in a direction parallel to the axis z. As described above, the light 34 emitted by the sample 4 in a direction parallel to the axis z comprises the light lines 31, 32.

The detection sub-system 3 according to the first embodiment of the present invention also preferably comprises a beam splitter 35 configured to split the light 34 emitted by the sample 4 into two portions, each portion following a respective detection path. The beam splitter 35 preferably has a splitting ratio of 50/50, so that the two portions have substantially the same intensity.

The detection sub-system 3 according to the first embodiment also preferably comprises, along each detection path, a respective spatial filter 36, 37 and a respective photodetector 38, 39.

Each photodetector 38, 39 may be for instance a bidimensional array of photodiodes, or a bidimensional CCD sensor, or a bidimensional CMOS sensor.

Each spatial filter 36, 37 may be a wall provided with a respective one of the detection slits DS1, DS2 described above in connection with Figure 3. Since, in this case, the position of the detection slits DS1, DS2 along the axis y is fixed, the detection sub-system 3 preferably comprises a further optical arrangement (not depicted in Figure 4) configured for subjecting the light lines 31, 32, before they impinge on the respective spatial filter 36, 37, to a translation parallel to the axis y and equal to and opposite to the translation of the light beams 23, 24 (the above mentioned "descanning"). In order to ensure the alignment of each light line 31, 32 with the respective detection slit DS1, DS2, such optical arrangement is preferably synchronized with the scanner 27 comprised in the illumination sub-system 2. Such further optical arrangement is preferably implemented by one or more galvo mirrors and/or piezoelectric mirrors.

Alternatively, according to a variant of the detection sub-system 3 not depicted in the drawings, the spatial filters 36, 37 may be omitted and each detection slit DS1, DS2 may be integrated in the respective photodetector 38, 39, for example as described by Baumgart et al: "Scanned light sheet microscopy with confocal slit detection" Optics Express, vol. 20, 21805-21814 (2012). In this case, each detection slit DS1, DS2 is implemented as a line of active pixels of the respective photodetector 38, 39, the other pixels being kept inactive. The active line of pixels is subjected over time to a translation along the axis y equal to that applied to the light beams 23, 24. In order to ensure the alignment of each light line 31, 32 with the respective detection slit DS1, DS2, each photodetector 38, 39 is preferably synchronized with the scanner 27 comprised in the illumination sub-system 2.

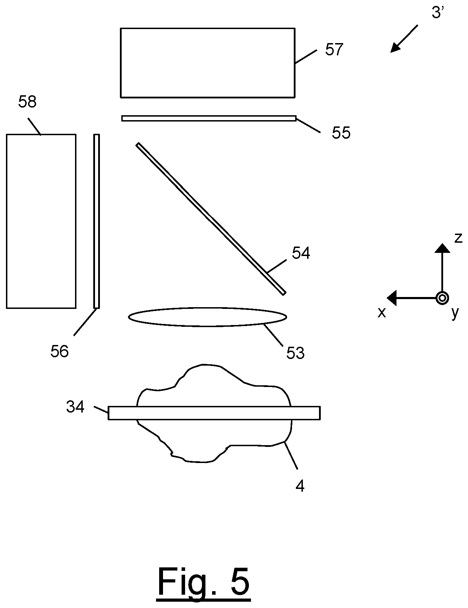

Figure 5 shows in further detail a detection sub-system 3' according to a second embodiment of the present invention.

According to the second embodiment, the detection sub-system 3' is configured to subject the light 34 emitted by the sample 4 to a wavelength-based separation, so that the portion of the emitted light which follows each detection path comprises (or mainly comprises) the light emitted by one of the illuminated strips. Hence, if for example the wavelength of each light beam 23, 24 is close to the peak of the absorption spectrum of a respective fluorophore, the detection sub-system 3' according to the second embodiment subjects the fluorescence light emitted by the sample 4 to a wavelength-based separation, so that the portion of the emitted light which follows a detection path comprises (or mainly comprises) the fluorescence light emitted by one strip, while the portion of the emitted light which follows the other detection path comprises (or mainly comprises) the fluorescence light emitted by the other strip.

Then, along each detection path, a spatial filtering is applied to the respective light portion as described above in connection with Figure 3.

It is noted that, according to this second embodiment, after the wavelength-based separation, along each one of the detection paths both the light lines 31, 32 may still be present, one of the light lines having an intensity much lower than the other one. The spatial filtering performed along each detection path advantageously further reduces (or even eliminates) the light line with lower intensity. The combination of wavelength-based separation and spatial filtering according to this second embodiment therefore advantageously results in a particularly reduced crosstalk between the emission spectra of the light lines 31, 32.

As depicted in Figure 5, the detection sub-system 3' according to the second embodiment of the present invention preferably comprises an objective 53 suitable for collecting the light 34 emitted by the sample 4 parallel to the axis z, which comprises the light lines 31, 32.

The detection sub-system 3' according to the second embodiment of the present invention also preferably comprises a wavelength-based separator 54 configured to subject the light 34 emitted by the sample 4 to a wavelength-based separation, as described above. The wavelength-based separator 54 may comprise for example a prism, a diffraction grating or a combination of one or more dichroic mirrors and mirrors.

Optionally, the detection sub-system 3' according to the second embodiment may also comprise, along each detection path, a respective bandpass filter 55, 56. Each bandpass filter 55, 56 is preferably centered about the emission spectrum of a respective light line 31, 32.

The detection sub-system 3' according to the second embodiment also preferably comprises, along each detection path, a respective photodetector 57, 58.

Each photodetector 57, 58 may be for instance a bidimensional array of photodiodes, or a bidimensional CCD sensor, or a bidimensional CMOS sensor.

Each photodetector 57, 58 is preferably configured to implement a respective one of the detection slits DS1, DS2, for example as described by Baumgart et al: "Scanned light sheet microscopy with confocal slit detection" Optics Express, vol. 20, 21805-21814 (2012). In this case, each detection slit DS1, DS2 is implemented as a line of active pixels of the respective photodetector 57, 58, the other pixels being kept inactive. The active line of pixels is subjected over time to a translation along the axis y equal to that applied to the light beams 23, 24. In order to ensure the alignment of each light line 31, 32 with the respective detection slit DS1, DS2, each photodetector 57, 58 is preferably synchronized with the scanner 27 comprised in the illumination sub-system 2.

Alternatively, according to a variant of the detection sub-system 3' not depicted in the drawings, the detection sub-system 3' may comprise, along each detection path, a respective spatial filter. Each spatial filter may comprise a wall provided with a respective one of the detection slits DS1, DS2 described above in connection with Figure 3. Since, in this case, the position of the detection slits DS1, DS2 along the axis y is fixed, the detection sub-system 3' preferably comprises a further optical arrangement (not depicted in Figure 5) configured for subjecting the light lines 31, 32, before they impinge on the respective spatial filter, to a translation parallel to the axis y and equal to and opposite to the translation of the light beams 23, 24 (the above mentioned "descanning"). In order to ensure the alignment of each light line 31, 32 with the respective detection slit DS1, DS2, such optical arrangement is preferably synchronized with the scanner 27 comprised in the illumination sub-system 2. Such optical arrangement is preferably implemented by one or more galvo mirrors and/or piezoelectric mirrors.

## Claims

1. A system (1) for multicolor light sheet microscopy, said system (1) comprising an illumination sub-system (2) and a detection sub-system (3), wherein:
- the illumination sub-system (2) is configured to emit at least two substantially parallel light beams (23, 24) having different wavelengths and being suitable for illuminating at least two corresponding strips of a sample (4); and to translate over time said at least two substantially parallel light beams (23, 24) along a predetermined direction, while keeping said at least two substantially parallel light beams (23, 24) at a non-null reciprocal distance (Y0) along said predetermined direction; and
- the detection sub-system (3) is configured to split light (34) emitted by said at least two corresponding strips of said sample (4) into at least two light portions following respective detection paths; and, along each detection path, to subject the respective light portion to a spatial filtering which isolates a light line (31, 32) emitted by one of said at least two corresponding strips of said sample (4), and to detect said light line (31, 32) emitted by one of said at least two corresponding strips of a sample (4).

2. The system (1) according to claim 1, wherein said non-null reciprocal distance (Y0) is set to a value such that a time lapsing between the instant at which one strip of said sample (4) is illuminated by one of said at least two substantially parallel light beams (23, 24) and then by the other one of said at least two substantially parallel light beams (23, 24) is comprised between 0.5 ms and 2 ms.

3. The system (1) according to claim 1 or 2, wherein said illumination sub-system (2) comprises at least one light source (21) and a scanner (27) configured to translate over time said at least two substantially parallel light beams (23, 24) along said predetermined direction, while keeping said at least two substantially parallel light beams (23, 24) at said non-null reciprocal distance (Y0) along said predetermined direction.

4. The system (1) according to any of the preceding claims, wherein said detection sub-system (3) comprises, along each detection path, a detection slit (DS1, DS2) configured to subject the respective light portion to said spatial filtering in a direction substantially parallel to said predetermined direction.

5. The system (1) according to claim 4, wherein said detection slit (DS1, DS2) has a width, along said predetermined direction, higher than a width of said light line (31, 32) and lower than said non-null reciprocal distance (Y0).

6. The system (1) according to claim 4 or 5 wherein said detection slit (DS1, DS2) has a fixed position along said predetermined direction, said detection sub-system (3) further comprising, along each detection path, an optical arrangement configured to keep said detection slit (DS1, DS2) aligned with said light line (31, 32) over time by translating said light line (31, 32) over time.

7. The system (1) according to claim 4 or 5, wherein said detection slit (DS1, DS2) has a variable position along said predetermined direction, said detection sub-system (3) further comprising, along each detection path, means for keeping said detection slit (DS1, DS2) aligned with said light line (31, 32) over time by translating said detection slit (DS1, DS2) over time.

8. The system (1) according to claim 7, wherein said detection slit (DS1, DS2) is implemented as a line of active pixels of a bidimensional array of pixels of a photodetector (57, 58), said detection slit (DS1, DS2) being kept aligned with said light line (31, 32) over time by translating said line of active pixels over time.

9. The system (1) according to any of the preceding claims, wherein said detection sub-system (3) comprises a beam splitter (25) configured to split said light (34) emitted by said at least two corresponding strips of said sample (4) into said at least two light portions following said respective detection paths.

10. The system (1) according to any of claims 1 to 8, wherein said detection sub-system (3) comprises a wavelength-based separator (54) configured to split said light (34) emitted by said at least two corresponding strips of said sample (4) into said at least two light portions following said respective detection paths, each light portion comprising the light line (31, 32) emitted by a respective one of said at least two corresponding strips of said sample (4).

11. The system (1) according to any of the preceding claims, wherein said detection sub-system (3) further comprises, along each detection path, a respective bandpass filter (55, 56).

12. A method for multicolor light sheet microscopy, said method comprising:
a) by means of at least two substantially parallel light beams (23, 24) having different wavelengths, illuminating at least two corresponding strips of a sample (4) and translating over time said at least two substantially parallel light beams (23, 24) along a predetermined direction, while keeping said at least two substantially parallel light beams (23, 24) at a non-null reciprocal distance (Y0) along said predetermined direction;
b) splitting light (34) emitted by said at least two corresponding strips of said sample (4) into at least two light portions following respective detection paths; and
c) along each detection path, subjecting the respective light portion to a spatial filtering which isolates a light line (31, 32) emitted by one of said at least two corresponding strips of said sample (4), and detecting said light line (31, 32) emitted by one of said at least two corresponding strips of a sample (4).

## Patentansprüche

1. System (1) für Mehrfarben-Lichtblattmikroskopie, das System (1) umfassend ein Beleuchtungsuntersystem (2) und ein Detektionsuntersystem (3), wobei:
- das Beleuchtungsuntersystem (2) dazu konfiguriert ist, mindestens zwei im Wesentlichen parallele Lichtstrahlen (23, 24) zu emittieren, die unterschiedliche Wellenlängen aufweisen und zum Beleuchten von mindestens zwei entsprechenden Streifen einer Probe (4) geeignet sind; und mit der Zeit die mindestens zwei im Wesentlichen parallelen Lichtstrahlen (23, 24) entlang einer vorbestimmten Richtung zu verschieben, während die mindestens zwei im Wesentlichen parallelen Lichtstrahlen (23, 24) in einem gegenseitigen Nicht-Null-Abstand (Y0) entlang der vorbestimmten Richtung gehalten werden; und
- das Detektionsuntersystem (3) dazu konfiguriert ist, Licht (34), das von den mindestens zwei entsprechenden Streifen der Probe (4) emittiert wird, in mindestens zwei Lichtabschnitte zu teilen, die jeweiligen Detektionspfaden folgen; und entlang jedem Detektionspfad den jeweiligen Lichtabschnitt einem räumlichen Filtern zu unterziehen, das eine von einem der mindestens zwei entsprechenden Streifen der Probe (4) emittierte Lichtlinie (31, 32) isoliert, und die Lichtlinie (31, 32), die von einem der mindestens zwei entsprechenden Streifen einer Probe (4) emittiert wird, zu detektieren.

2. System (1) nach Anspruch 1, wobei der gegenseitige Nicht-Null-Abstand (Y0) auf einen Wert festgelegt wird, sodass eine Zeit, die zwischen dem Moment, in dem ein Streifen der Probe (4) durch einen der mindestens zwei im Wesentlichen parallelen Lichtstrahlen (23, 24) und dann durch den anderen der mindestens zwei im Wesentlichen parallelen Lichtstrahlen (23, 24) beleuchtet wird, vergeht, zwischen 0,5 ms und 2 ms umfasst ist.

3. System (1) nach Anspruch 1 oder 2, wobei das Beleuchtungsuntersystem (2) mindestens eine Lichtquelle (21) und einen Scanner (27) umfasst, der dazu konfiguriert ist, die mindestens zwei im Wesentlichen parallelen Lichtstrahlen (23, 24) mit der Zeit entlang der vorbestimmten Richtung zu verschieben, während die mindestens zwei im Wesentlichen parallelen Lichtstrahlen (23, 24) in dem gegenseitigen Nicht-Null-Abstand (Y0) entlang der vorbestimmten Richtung gehalten werden.

4. System (1) nach einem der vorhergehenden Ansprüche, wobei das Detektionsuntersystem (3) entlang jedem Detektionspfad einen Detektionsschlitz (DS1, DS2) umfasst, der dazu konfiguriert ist, den jeweiligen Lichtabschnitt dem räumlichen Filtern in einer Richtung zu unterziehen, die im Wesentlichen parallel zu der vorbestimmten Richtung ist.

5. System (1) nach Anspruch 4, wobei der Detektionsschlitz (DS1, DS2) eine Breite entlang der vorbestimmten Richtung aufweist, die größer ist als eine Breite der Lichtlinie (31, 32) und kleiner ist als der gegenseitige Nicht-Null-Abstand (Y0).

6. System (1) nach Anspruch 4 oder 5, wobei der Detektionsschlitz (DS1, DS2) eine feste Position entlang der vorbestimmten Richtung aufweist, wobei das Detektionsuntersystem (3) ferner entlang jedem Detektionspfad eine optische Anordnung umfasst, die dazu konfiguriert ist, den Detektionsschlitz (DS1, DS2) mit der Zeit an der Lichtlinie (31, 32) ausgerichtet zu halten, indem die Lichtlinie (31, 32) mit der Zeit verschoben wird.

7. System (1) nach Anspruch 4 oder 5, wobei der Detektionsschlitz (DS1, DS2) eine variable Position entlang der vorbestimmten Richtung aufweist, wobei das Detektionsuntersystem (3) ferner entlang jedem Detektionspfad Mittel umfasst, um den Detektionsschlitz (DS1, DS2) mit der Zeit an der Lichtlinie (31, 32) ausgerichtet zu halten, indem der Detektionsschlitz (DS1, DS2) mit der Zeit verschoben wird.

8. System (1) nach Anspruch 7, wobei der Detektionsschlitz (DS1, DS2) als eine Linie von aktiven Pixeln eines zweidimensionalen Pixel-Arrays eines Photodetektors (57, 58) implementiert wird, wobei der Detektionsschlitz (DS1, DS2) mit der Zeit an der Lichtlinie (31, 32) ausgerichtet gehalten wird, indem die Linie von aktiven Pixeln mit der Zeit verschoben wird.

9. System (1) nach einem der vorhergehenden Ansprüche, wobei das Detektionsuntersystem (3) einen Strahlteiler (25) umfasst, der dazu konfiguriert ist, das von den mindestens zwei entsprechenden Streifen der Probe (4) emittierte Licht (34) in die mindestens zwei Lichtabschnitte, die den jeweiligen Detektionspfaden folgen, zu teilen.

10. System (1) nach einem der Ansprüche 1 bis 8, wobei das Detektionsuntersystem (3) eine Wellenlängen-basierte Trennvorrichtung (54) umfasst, die dazu konfiguriert ist, das von den mindestens zwei entsprechenden Streifen der Probe (4) emittierte Licht (34) in die mindestens zwei Lichtabschnitte, die den jeweiligen Detektionspfaden folgen, zu teilen, wobei jeder Lichtabschnitt die von einem jeweiligen der mindestens zwei entsprechenden Streifen der Probe (4) emittierte Lichtlinie (31, 32) umfasst.

11. System (1) nach einem der vorhergehenden Ansprüche, wobei das Detektionsuntersystem (3) ferner entlang jedem Detektionspfad einen jeweiligen Bandpassfilter (55, 56) umfasst.

12. Verfahren für eine Mehrfarben-Lichtblattmikroskopie, das Verfahren umfassend:
a) anhand von mindestens zwei im Wesentlichen parallelen Lichtstrahlen (23, 24), die unterschiedliche Wellenlängen aufweisen, Beleuchten von mindestens zwei entsprechenden Streifen einer Probe (4) und Verschieben der mindestens zwei im Wesentlichen parallelen Lichtstrahlen (23, 24) mit der Zeit entlang einer vorbestimmten Richtung, während mindestens zwei im Wesentlichen parallele Lichtstrahlen (23, 24) in einem gegenseitigen Nicht-Null-Abstand (Y0) entlang der vorbestimmten Richtung gehalten werden;
b) Teilen von Licht (34), das von mindestens zwei entsprechenden Streifen der Probe (4) emittiert wird, in mindestens zwei Lichtabschnitte, die den jeweiligen Detektionspfaden folgen; und
c) entlang jedem Detektionspfad, Unterziehen des jeweiligen Lichtabschnitts einem räumlichen Filtern, das eine von einem der mindestens zwei entsprechenden Streifen der Probe (4) emittierte Lichtlinie (31, 32) isoliert, und Detektieren der Lichtlinie (31, 32), die von einem der mindestens zwei entsprechenden Streifen einer Probe (4) emittiert wird.

## Revendications

1. Système (1) de microscopie à feuille de lumière multicolore, ledit système (1) comprenant un sous-système d'éclairage (2) et un sous-système de détection (3), dans lequel :
- le sous-système d'éclairage (2) est configuré pour émettre au moins deux faisceaux de lumière sensiblement parallèles (23, 24) ayant des longueurs d'onde différentes et étant adaptés pour éclairer au moins deux bandes correspondantes d'un échantillon (4) ; et pour déplacer au fil du temps lesdits au moins deux faisceaux de lumière sensiblement parallèles (23, 24) le long d'une direction prédéterminée, tout en maintenant lesdits au moins deux faisceaux de lumière sensiblement parallèles (23, 24) à une distance réciproque non nulle (Y0) le long de ladite direction prédéterminée ; et
- le sous-système de détection (3) est configuré pour diviser la lumière (34) émise par lesdites au moins deux bandes correspondantes dudit échantillon (4) en au moins deux parties de lumière suivant des trajets de détection respectifs ; et, le long de chaque trajet de détection, pour soumettre la partie de lumière respective à un filtrage spatial qui isole une ligne de lumière (31, 32) émise par l'une desdites au moins deux bandes correspondantes dudit échantillon (4), et pour détecter ladite ligne de lumière (31, 32) émise par l'une desdites au moins deux bandes correspondantes d'un échantillon (4).

2. Système (1) selon la revendication 1, dans lequel ladite distance réciproque non nulle (Y0) est définie à une valeur telle qu'un temps s'écoulant entre l'instant auquel une bande dudit échantillon (4) est éclairée par l'un desdits au moins deux faisceaux de lumière sensiblement parallèles (23, 24) et ensuite par l'autre desdits au moins deux faisceaux de lumière sensiblement parallèles (23, 24) est compris entre 0,5 ms et 2 ms.

3. Système (1) selon la revendication 1 ou 2, dans lequel ledit sous-système d'éclairage (2) comprend au moins une source lumineuse (21) et un scanner (27) configuré pour déplacer au fil du temps lesdits au moins deux faisceaux de lumière sensiblement parallèles (23, 24) le long de ladite direction prédéterminée, tout en maintenant lesdits au moins deux faisceaux de lumière sensiblement parallèles (23, 24) à ladite distance réciproque non nulle (Y0) le long de ladite direction prédéterminée.

4. Système (1) selon l'une quelconque des revendications précédentes, dans lequel ledit sous-système de détection (3) comprend, le long de chaque trajet de détection, une fente de détection (DS1, DS2) configurée pour soumettre la partie de lumière respective audit filtrage spatial dans une direction sensiblement parallèle à ladite direction prédéterminée.

5. Système (1) selon la revendication 4, dans lequel ladite fente de détection (DS1, DS2) a une largeur, le long de ladite direction prédéterminée, supérieure à une largeur de ladite ligne de lumière (31, 32) et inférieure à ladite distance réciproque non nulle (Y0).

6. Système (1) selon la revendication 4 ou 5 dans lequel ladite fente de détection (DS1, DS2) a une position fixe le long de ladite direction prédéterminée, ledit sous-système de détection (3) comprenant en outre, le long de chaque trajet de détection, un agencement optique configuré pour maintenir ladite fente de détection (DS1, DS2) alignée avec ladite ligne de lumière (31, 32) au fil du temps en déplaçant ladite ligne de lumière (31, 32) au fil du temps.

7. Système (1) selon la revendication 4 ou 5, dans lequel ladite fente de détection (DS1, DS2) a une position variable le long de ladite direction prédéterminée, ledit sous-système de détection (3) comprenant en outre, le long de chaque trajet de détection, des moyens pour maintenir ladite fente de détection (DS1, DS2) alignée avec ladite ligne de lumière (31, 32) au fil du temps en déplaçant ladite fente de détection (DS1, DS2) au fil du temps.

8. Système (1) selon la revendication 7, dans lequel ladite fente de détection (DS1, DS2) est mise en œuvre sous la forme d'une ligne de pixels actifs d'une matrice bidimensionnelle de pixels d'un photodétecteur (57, 58), ladite fente de détection (DS1, DS2) étant maintenue alignée avec ladite ligne de lumière (31, 32) au fil du temps en déplaçant ladite ligne de pixels actifs au fil du temps.

9. Système (1) selon l'une quelconque des revendications précédentes, dans lequel ledit sous-système de détection (3) comprend un diviseur de faisceau (25) configuré pour diviser ladite lumière (34) émise par lesdites au moins deux bandes correspondantes dudit échantillon (4) en lesdites au moins deux parties de lumière suivant lesdits trajets de détection respectifs.

10. Système (1) selon l'une quelconque des revendications 1 à 8, dans lequel ledit sous-système de détection (3) comprend un séparateur basé sur la longueur d'onde (54) configuré pour diviser ladite lumière (34) émise par lesdites au moins deux bandes correspondantes dudit échantillon (4) en lesdites au moins deux parties de lumière suivant lesdits trajets de détection respectifs, chaque partie de lumière comprenant la ligne de lumière (31, 32) émise par l'une respective desdites au moins deux bandes correspondantes dudit échantillon (4).

11. Système (1) selon l'une quelconque des revendications précédentes, dans lequel ledit sous-système de détection (3) comprend en outre, le long de chaque trajet de détection, un filtre passe-bande (55, 56) respectif.

12. Procédé de microscopie à feuille de lumière multicolore, ledit procédé comprenant :
a) au moyen d'au moins deux faisceaux de lumière sensiblement parallèles (23, 24) ayant des longueurs d'onde différentes, l'éclairage d'au moins deux bandes correspondante d'un échantillon (4) et le déplacement au fil du temps desdits au moins deux faisceaux de lumière sensiblement parallèles (23, 24) le long d'une direction prédéterminée, tout en maintenant lesdits au moins deux faisceaux de lumière sensiblement parallèles (23, 24) à une distance réciproque non nulle (Y0) le long de ladite direction prédéterminée ;
b) la division de la lumière (34) émise par lesdites au moins deux bandes correspondantes dudit échantillon (4) en au moins deux parties de lumière suivant des trajets de détection respectifs ; et
c) le long de chaque trajet de détection, la soumission de la partie de lumière respective à un filtrage spatial qui isole une ligne de lumière (31, 32) émise par l'une desdites au moins deux bandes correspondantes dudit échantillon (4), et la détection de ladite ligne de lumière (31, 32) émise par l'une desdites au moins deux bandes correspondantes d'un échantillon (4).
